(19) Europäisches Patentamt
European Patent Office
Office européen des brevets

(11) EP 0 330 394 B1

## (12) EUROPEAN PATENT SPECIFICATION

(45) Date of publication and mention
of the grant of the patent:
**17.07.1996 Bulletin 1996/29**

(51) Int Cl.$^6$: **G11B 11/10**, G11B 5/66

(21) Application number: **89301599.0**

(22) Date of filing: **20.02.1989**

(54) **Two-layered type opto-magnetic recording medium having low-coercive force layer containing Gd and at least one of Tb and Dy**

Zweischichtiger magneto-optischer Aufzeichnungsträger mit einer Schicht niedriger Koerzitivkraft, bestehend aus Gd und mindestens Tb oder Dy

Milieu en deux couches pour l'enregistrement magnéto-optique ayant une couche de basse force coercitive contenant Gd et au moins un élément de Tb et Dy

(84) Designated Contracting States:
**DE FR GB NL**

(30) Priority: **22.02.1988 JP 37533/88**
**10.03.1988 JP 55055/88**

(43) Date of publication of application:
**30.08.1989 Bulletin 1989/35**

(73) Proprietor: **CANON KABUSHIKI KAISHA**
**Tokyo (JP)**

(72) Inventor: **Kobayashi, Tadashi**
**Meguro-ku Tokyo (JP)**

(74) Representative:
**Beresford, Keith Denis Lewis et al**
**BERESFORD & Co.**
**2-5 Warwick Court**
**High Holborn**
**London WC1R 5DJ (GB)**

(56) References cited:
EP-A- 0 051 296       EP-A- 0 257 530
EP-A- 0 258 978       EP-A- 0 305 185
DE-A- 3 619 618       JP-A-60 177 455

• **PATENT ABSTRACTS OF JAPAN, vol. 10, no. 26 (P-425)[2083], 31st January 1986; JP-A-60 177 455 (NIHON KOUGAKU KOGYO K.K.)**

• T. Kobayashi et al.: "Magnetization Process of Exchange-Coupled Ferrimagnetic Double-Layered Films", Japanese Journal of Applied Physics, vol.20 no.11 Nov. 1981, p.2089-2095
• S. Tsunashima: "Thermomagnetic writing on exchange-coupled amorphous rare-earth iron double-layer films", IEEE Transactions on Magnetics, Nov. 1981, vol. MAG-17 no.6, p.2840-2842
• English translation of Japanese patent application no. 61-104961 dated 20.08.86 received on 18.08.87 in European file no. 87111990.5
• T. Kobayashi et al.: "Magnetization Process of Exchange-Coupled Ferrimagnetic Double-Layered Films", Japanese Journal of Applied Physics, vol.20 no.11 Nov. 1981, p.2089-2095;
• S. Tsunashima: "Thermomagnetic writing on exchange-coupled amorphous rare-earth iron double-layer films", IEEE Transactions on Magnetics, Nov. 1981, vol. MAG-17 no.6, p.2840-2842;
• English translation of the Japanese patent applica- tion no.61-194961 dated 20.08.86 as received on 18.08.87 in the European file no. 87111990.5, pub- lished as D6.

**Description**

BACKGROUND OF THE INVENTION:

Field of the Invention

The present invention relates to an opto-magnetic recording medium used for an opto-magnetic memory and the like and, more specifically, to an opto-magnetic recording medium capable of thermo-magnetically recording data by radiation of light beams and reading out recorded data by using a magneto-optical effect.

Related Background Art

There are already known magnetooptical information recording media utilizing a polycrystalline thin layer for example of MnBi or MnCuBi, an amorphous thin layer for example of GdCo, GdFe, TbFe, DyFe, GdTbFe or TbDyFe, or a crystalline thin layer for example of GIG. Among these materials, a thin layer of rare earth-transition metal amorphous alloys is recently considered adequate for producing a magnetooptical information recording medium, in consideration of ease of producing a thin layer of a large area at a temperature close to the normal temperature.

In general, the magnetooptical information recording medium is required to show a high recording sensitivity, a large magnetooptical effect and a high coercive force. However it has been difficult to meet all these requirements with any of the above-mentioned thin layers alone. For example, GdCo or GdFe, allowing compensation point recording, shows a large magnetooptical effect at information reading and provides a high S/N ratio due to a relatively high Curie temperature, but shows a low coercive force so that the recorded domains are unstable. On the other hand, TbFe or DyFe allowing Curie point recording is not associated with the above-mentioned drawbacks because of a relatively high coercive force, but provides a low S/N ratio at information reading due to the low Curie temperature. In order to avoid these drawbacks, there is proposed, for example in the U.S. P. No. 4,799,114, a magnetooptical information recording medium of a two-layered structure. This recording medium comprises a perpendicularly magnetizable high-coercive force layer having a low Curie point and a perpendicularly magnetizable low-coercive force layer having a high Curie point. The high-coercive force layer is exchange-coupled with the low-coercive force layer. Information is recorded and stored in the high-coercive force layer having the low Curie point. The recorded information is transferred to the low-coercive force layer. The stored information is read out from the low-coercive force layer having the high Curie point and a high opto-magnetic Kerr rotational angle.

U.S.P. No. 4,753,853 proposes an opto-magnetic recording medium wherein a rare earth-iron amorphous alloy having iron group sublattice magnetization superiority is used to form a high-coercive force layer, a rare earth-iron amorphous alloy also having iron group sublattice magnetization superiority is used to form a low-coercive force layer, and directions of saturated magnetization of the rare earth element and iron are parallel to each other.

Such an opto-magnetic recording medium also has a problem of recording stability as well as recording/reproducing characteristics as in other recording media. When stability of recorded information is taken into consideration, stability not only at a room temperature but also one at a temperature slightly higher than the room temperature must be considered. Since the opto-magnetic drive apparatus includes various heat radiation sources, a temperature inside the apparatus is often increased to about 50 to 60°C. Information is read out by radiating a laser beam, which is low enough not to record information, onto a medium. In this case, a temperature rise of the medium to some extent is inevitable. In addition, owing to the operation of the drive apparatus, reading must often be performed while a recording/erasing bias magnetic field is applied. Therefore, recorded information must be stable when the temperature of the medium is further increased by a read light beam upon application of the bias magnetic field in the drive apparatus at a temperature of 50 to 60°C.

Patent Abstracts of Japan Vol. 10, No. 26 (P-425) [2083] and JP-A-60177455 which is reflected in the preamble of claim 1 disclose a magnetooptical recording medium comprising two exchange coupled magnetic layers. The first layer has a relatively low Curie temperature and a high coercive force, while the second layer has a relatively high Curie temperature and a low coercive force. The first layer is formed from an amorphous alloy of DyFeCo. The second layer is formed of an amorphous alloy of GdFeCo. Data is recorded on the medium by heating the medium to a temperature between the two Curie temperatures in the presence of an external magnetic field.

EP-A-258978 also discloses a magnetooptical recording medium comprising two exchange coupled magnetic layers in which the second magnetic layer has a higher Curie temperature and a lower coercive force than the first layer. The first layer may be formed of amorphous alloys of TbDyFeCo. The second magnetic layer may be formed of amorphous alloys of TbGdFeCo. Either layer may have a rare earth or transition metal sublattice magnetization superiority. The magnetooptical recording medium enables an overwriting operation.

Japanese Journal of Applied Physics, Vol 20, No. 11, November 1981, pages 2089 - 2095, "Magnetization Process of Exchange-Coupled Ferrimagnetic Double-Layered Films" by T Kobayashi et al describes double layered magnetic films for use as magnetooptic storage media. The films each comprise a rare earth transition metal amorphous alloy film in which the magnetic movement is perpendicular to the layer of the film. The experimental and theoretical switching fields for reversing the magnetization in a chosen region of the films are compared.

IEEE Transactions of Magnetics, MAG-17, No. 6, November 1981, pages 2840 - 2842 "Thermomagnetic Writing on Exchange-Coupled Amorphous Rare-Earth Iron Double-Layer Films" by S Tsunashima et al discloses a double layer magnetooptical storage material comprising two exchange coupled layers of rare earth transition metal films. One layer is formed of a GdFe amorphous alloy. The other layer is formed of a TbFe or DyFe amorphous alloy. The switching field is increased and the size of the bit sizes for various optical beam durations are measured.

EP-A-305185 discloses a magnetooptic recording medium including a first magnetic layer of a GdFeCo amorphous alloy, and a second magnetic layer of a Tb-FeCo or DyFeCo amorphous alloy. The first and second magnetic layers are exchanged-coupled. The recording medium is designed to permit the recording and read-out of stable recorded information on the medium. This document forms part of the state of the art under Article 54 (3) EPC only.

EP-A-257530 discloses a double-layered magnetooptical recording medium comprising two exchange coupled layers of rare earth transition metal amorphous alloys. The first layer is made of TbFe. The second layer is made of GdTbFeCo. Overwriting information can be achieved without using a modulated external magnetic field by applying a light beam of two different intensities. This document forms part of the state of the art under Article 54(3) EPC only.

## SUMMARY OF THE INVENTION

It is an object of the present invention to provide an opto-magnetic recording medium which can assure higher stability of recorded information than the related arts.

According to the present invention there is provided an opto-magnetic recording medium having first and second magnetic layers comprising rare earth-iron group amorphous alloys, the second magnetic layer having a higher Curie temperature and a lower coercive force than those of the first magnetic layer and the second magnetic layer being exchanged-coupled with the first magnetic layer, wherein the following condition is satisfied:

$$H_H > \sigma_w / (2M_s h) > H_L,$$

where $H_H$ is the coercive force of the first magnetic layer, $H_L$ is the coercive force of the second magnetic layer, $M_S$ is the saturated magnetization of the second magnetic layer, h is the film thickness of the second magnetic layer and $\sigma_w$ is the magnetic wall energy between the first and second magnetic layers, the medium being characterised in that said first magnetic layer has a rare earth group sublattice magnetization superiority and a saturated magnetization in the range of 31.425 to 219.975 x $10^{-3}$Wb/m$^2$ (25 to 175 emu/cm$^3$), and said second magnetic layer has an iron group sublattice magnetization superiority and a saturated magnetization in the range of 62.85 to 251.4 x $10^{-3}$Wb/m$^2$ (50 to 200 emu/cm$^3$); and that said second magnetic layer comprises Gd and at least one of Tb and Dy and at least one of Fe and Co.

## BRIEF DESCRIPTION OF THE DRAWING:

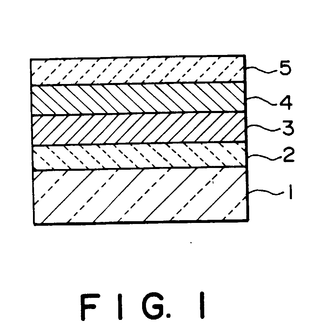

Fig. 1 is a schematic sectional view showing an embodiment of an opto-magnetic recording medium according to the present invention.

## DETAILED DESCRIPTION OF THE PREFERRED EMBODIMENT:

An embodiment of the present invention will now be described in detail with reference to the accompanying drawing.

Fig. 1 is a schematic sectional view showing a structure of an embodiment of an opto-magnetic recording medium according to the present invention. In Fig. 1, a transparent substrate 1 is formed of glass or plastic. An undercoating layer 2 formed of a dielectric such as $Si_3N_4$ for obtaining an interference effect and an anti-corrosion effect is formed on the substrate 1. A second magnetic layer 3 and a first magnetic layer 4 having a higher coercive force and a lower Curie temperature than those of the second magnetic layer 3 are formed on the undercoating layer 2. These magnetic layers are successively formed while maintaining a vacuum state during production of the medium, and are exchange-coupled with each other. A protective layer 5 of a dielectric such as $Si_3N_4$ for preventing these magnetic layers from being corroded is formed on the first magnetic layer 4.

In the medium described above, both the first and second magnetic layers are formed of a rare earth-iron amorphous alloy. The second magnetic layer 3 contains Gd and at least one of Tb and Dy, and satisfies:

$$H_H > \frac{\sigma_w}{2M_s h} > H_L$$

where $H_H$ is the coercive force of the first magnetic layer, $H_L$ is the coercive force of the second magnetic layer, $M_S$ is the saturated magnetization of the second layer, h is the film thickness of the second magnetic layer, and $\sigma_w$ is the magnetic wall energy between the first and second magnetic layers.

The film thickness of the second magnetic layer preferably falls in the range of 100 to 1,000 Å, the film thickness of the first magnetic layer preferably falls in the range of 100 to 2,000 Å, and the total film thickness of the first and second magnetic layers preferably falls in the range of 500 to 2,000 Å.

Information recording and reproducing using the opto-magnetic recording medium of the present invention are performed in the same manner as in U.S.P. No. 4,799,114 described above.

Stability of recorded information as the characteristic feature of the present invention will be described below.

It has been found in a production process of the present invention that the stability of recording information was influenced by the Curie temperature of the high-coercive force layer (first magnetic layer), an apparent magnitude of the coercive force of the high-coercive force layer, the film thicknesses of the layers, and a magnitude the coercive force of the low-coercive force layer (second magnetic layer) in an exchange-coupled two-layered film like a medium of the present invention.

The first factor influencing the stability of recorded information is the Curie temperature of the high-coercive force layer. As the Curie temperature is higher, the stability of recorded information is improved but a recording sensitivity is impaired. The high-coercive force layer preferably has a Curie temperature of 100°C or higher, more preferably, 130°C or higher, and most preferably, 150°C or higher. As a rare earth element of the high-coercive force layer, a non-S state element such as Tb and Dy is preferably used in order to increase the coercive force. The Curie temperatures of Tb-Fe and Dy-Fe are respectively about 130°C and about 70°C. By adding Co, the Curie temperature can be desirably controlled.

The Curie temperatures of $Tb\text{-}(Fe_{100\text{-}X}Co_X)$ and $Dy\text{-}(Fe_{100\text{-}Y}Co_Y)$ can be approximately expressed by:

$$130 + 6X \ (°C)$$

$$70 + 6Y \ (°C)$$

Therefore, Co can be doped to attain a desired Curie temperature using these formulas.

The second factor influencing the stability of recorded information is the apparent magnitude of the coercive force of the high-coercive force layer. In order to stabilize recorded information on the basis of this factor, an exchange-coupled two-layered film wherein the high-coercive force layer has rare earth group sublattice magnetization superiority, the low-coercive force layer has iron group sublattice magnetization superiority, and the high-coercive force layer has a compensation temperature between the room temperature and the Curie temperature is preferably used. In this medium, the apparent coercive force of the high-coercive force layer in the two-layered structure becomes larger than that of the high-coercive force layer alone, and recording stability can be improved.

The third factor influencing the stability of recorded information is the film thicknesses of the layers. For example, the film thickness of the low-coercive force layer is preferably selected to be smaller than that of the high-coercive force layer, like 400 Å and 600 Å or 300 Å and 700 Å rather than a case wherein the high- and low-coercive force layers have the same thickness, e.g., 500 Å and 500 Å. Thus, recording stability can be improved. However, if the film thickness of the low-coercive force layer is too small, the magnetooptical effect is reduced, and reproducing characteristics are impaired.

Further it has been found that the magnitude of the coercive force of the low-coercive force layer was a factor influencing the stability of recording characteristics in addition to the above-mentioned factors.

Conventionally, it has been considered that an S-state element is preferably used as a rare earth element of the low-coercive force layer in order to reduce the coercive force. As the S-state element, Eu and Gd are known. Since Eu has high reactivity, Gd is mainly used.

Of alloys using Gd, Gd-Fe is suitable for the high-coercive force layer having a Curie temperature of as high as about 220°C. By further doping Co, the Curie temperature is increased, and an opto-magnetic Kerr rotational angle is increased, thus improving reading characteristics. However, in $Gd\text{-}(Fe_{100\text{-}Z}Co_Z)$, if $Z \geq 30$, an iron group magnetic moment is decreased. Thus, $Z \leq 50$ is preferable.

The present inventors attempted to dope Tb or Dy as a non-S state element in Gd-Fe or Gd-Fe-Co constituting the low-coercive force layer, and found that stability of recorded information was improved due to a change in coercive force of the low-coercive force layer upon doping, thus achieving the present invention.

More specifically, when the low-coercive force layer of the exchange-coupled two-layered film has a Gd-Fe or Gd-Fe-Co composition, the coercive force is too small, and if it has a Tb-Fe-Co or Dy-Fe-Co composition, the coercive force is too large.

When Gd-Tb-Fe, Gd-Tb-Fe-Co, Gd-Dy-Fe, Gd-Dy-Fe-Co, and the like having intermediate natures of the above-mentioned compositions were used, it was found that recording stability, in particular, durability with respect to deterioration of recorded information caused by a reproducing light beam could be improved while recording/reproducing characteristics remained the same.

Examples of a base element other than Gd, Tb, and Dy are Fe and Co. However, Ni, Cr, Ti, Al, Si, Pt, In, Cu, or the like may be doped.

The composition is preferably represented by:

$$(Gd - R)_W M_{1\text{-}W}$$

where R is at least one element of Tb and Dy, M is at least one element of Fe and Co, and $0.15 < W < 0.30$.

Example 1

A 700-Å thick $Si_3N_4$ film for obtaining an anti-oxidation effect and an interference effect, a 400-Å thick Gd-Tb-Fe-Co film as a low-coercive force layer, a 600-Å thick Tb-Fe-Co film as a high-coercive force layer, and a 700-Å thick $Si_3N_4$ film for an anti-oxidation effect were successively formed on a 130-mm diameter pregrooved polycarbonate substrate using a magnetron sputtering apparatus while maintaining a vacuum state, thus producing an opto-magnetic disk of an exchange-coupled two-layered film. As targets for the magnetic layers, Gd, Tb, $Fe_{70}Co_{30}$, and $Fe_{94}Co_6$ were used. The Gd-Tb-Fe-Co film was formed using Gd, Tb, and $Fe_{70}Co_{30}$, and the Tb-Fe-Co film was formed using Tb and $Fe_{94}Co_6$. The composition ratio of Gd and Tb or the composition ratio of the rare earth element and the iron group element was controlled by changing an electric power applied to the targets. An X value of the $(Gd_xTb_{100-X})$-$(Fe_{100-Y}Co_Y)$ film was about 75, and a Y value was about 30. An Ar gas pressure was set to be 0.15 Pa, a film formation rate of the $Si_3N_4$ film was about 40 Å/min, and the film formation rate of each magnetic layer was about 100 Å/min. The interface magnetic wall energy density of the exchange-coupled two-layered film was about 2 $erg/cm^2$. Thus, it was demonstrated that a good exchange interaction acted between the two magnetic layers.

Recording/reproducing characteristics of the disk were measured using a bias magnetic field of 200 Oe at a rotational speed of 1,500 rpm and at a position of a radius of 60 mm.

When the low-coercive force layer comprised the Gd-Tb-Fe-Co film having iron group sublattice magnetization superiority and saturated magnetization falling in the range of 50 to 200 $emu/cm^3$ and the high-coercive layer comprised the Tb-Fe-Co film having rare earth group sublattice magnetization superiority and saturated magnetization falling within the range of 25 to 175 $emu/cm^3$, the recording sensitivity was about 7.0 mW, and a reproducing CN ratio was about 57 dB. Thus, good recording/reproducing characteristics could be obtained.

A maximum power free from deterioration of recorded information was as high as about 2.8 mW in a magnetic field of 600 Oe.

Comparative Example 1

For the purpose of comparison with Example 1, a disk was produced using the same targets as those in Example 1 to have a low-coercive force layer of Gd-Fe-Co having iron group sublattice magnetization superiority and saturated magnetization falling in the range of 50 to 150 $emu/cm^3$ and a high-coercive force layer having the same characteristics as that in Example 1. The recording sensitivity was about 6.7 mW, and a reproducing CN ratio was about 58 dB. Thus, although good recording/reproducing characteristics could be obtained, a maximum reproducing power in a magnetic field of 600 Oe was as low as about 2.1 mW.

Example 2

Gd, Tb, Dy, $Fe_{70}Co_{30}$, and $Fe_{85}Co_{15}$ were used as targets for magnetic layers. As a low-coercive force layer, a Gd-Tb-Fe-Co film was formed using Gd, Tb, and $Fe_{70}Co_{30}$. As a high-coercive force layer, a Dy-Fe-Co film was formed using Dy and $Fe_{85}Co_{15}$. Other conditions were the same as those in Example 1.

When the low-coercive force layer comprised the Gd-Tb-Fe-Co film having iron group sublattice magnetization superiority and saturated magnetization falling in the range of 50 to 200 $emu/cm^3$ and the high-coercive layer comprised the Dy-Fe-Co film having rare earth group sublattice magnetization superiority and saturated magnetization falling within the range of 25 to 175 $emu/cm^3$, the recording sensitivity was about 6.8 mW, and a reproducing CN ratio was about 56 dB. Thus, good recording/reproducing characteristics could be obtained.

A maximum power free from deterioration of recorded information was as high as about 2.7 mW in a magnetic field of 600 Oe.

Comparative Example 2

For the purpose of comparison with Example 2, a disk was produced using the same targets as those in Example 2 to have a low-coercive force layer of Gd-Fe-Co having iron group sublattice magnetization superiority and saturated magnetization falling in the range of 50 to 150 $emu/cm^3$ and a high-coercive force layer having the same characteristics as that in Example 2. The recording sensitivity was about 6.7 mW, and a reproducing CN ratio was about 56 dB. Thus, although good recording/reproducing characteristics could be obtained, a maximum reproducing power in a magnetic field of 600 Oe was as low as about 1.9 mW.

Example 3

Following substantially the same procedures as in Example 1 except X = 50, a disk was produced to have a low-coercive force layer of a Gd-Tb-Fe-Co film having iron group sublattice magnetization superiority and saturated magnetization falling in the range of 50 to 250 $emu/cm^3$, and a high-coercive force layer of a Tb-Fe-Co film having rare earth group sublattice magnetization superiority and saturated magnetization falling in the range of 25 to 175 $emu/cm^3$. The recording sensitivity was about 7.3 mW, and a reproducing CN ratio was about 56 dB. Thus, good recording/reproducing characteristics were obtained. A maximum reproducing power in a magnetic field of 600 Oe was as high as about 3.1 mW.

Example 4

A 700-Å thick $Si_3N_4$ film for obtaining an anti-oxidation effect and an interference effect, a 400-Å thick Gd-Dy-Fe-Co film as a low-coercive force layer, a 600-Å thick Tb-Fe-Co film as a high-coercive force layer, and a 700-Å thick $Si_3N_4$ film for an anti-oxidation effect were successively formed on a 130-mm diameter pregrooved polycarbonate substrate using a magnetron sputtering apparatus while maintaining a vacuum state, thus producing an opto-magnetic disk of an exchange-coupled two-layered film. As targets for the magnetic layers, Gd, Dy, Tb, $Fe_{70}Co_{30}$, and $Fe_{94}Co_6$ were used. The Gd-Dy-Fe-Co film was formed using Gd, Dy, and $Fe_{70}Co_{30}$, and the Tb-Fe-Co film was formed using Tb and $Fe_{94}Co_6$. The composition ratio of Gd and Dy or the composition ratio of the rare earth element and the iron group element was controlled by changing an electric power applied to the targets. An X value of the $(Gd_xDy_{100-X})$-$(Fe_{100-Y}Co_Y)$ film was about 75, and a Y value was about 30. An Ar gas pressure was set to be 0.15 Pa, a film formation rate of the $Si_3N_4$ film was about 40 Å/min, and the film formation rate of each magnetic layer was about 100 Å/min. The interface magnetic wall energy density of the exchange-coupled two-layered film was about 2 $erg/cm^2$. Thus, it was demonstrated that a good exchange interaction acted between the two magnetic layers.

Recording/reproducing characteristics of the disk were measured using a bias magnetic field of 200 Oe at a rotational speed of 1,500 rpm and at a position of a radius of 60 mm.

When the low-coercive force layer comprised the Gd-Dy-Fe-Co film having iron group sublattice magnetization superiority and saturated magnetization falling in the range of 50 to 200 $emu/cm^3$ and the high-coercive layer comprised the Tb-Fe-Co film having rare earth group sublattice magnetization superiority and saturated magnetization falling within the range of 25 to 175 $emu/cm^3$, the recording sensitivity was about 6.8 mW, and a reproducing CN ratio was about 56 dB. Thus, good recording/reproducing characteristics could be obtained.

A maximum power free from deterioration of recorded information was as high as about 2.7 mW in a magnetic field of 600 Oe.

Comparative Example 3

For the purpose of comparison with Example 4, a disk was produced using the same targets as those in Example 4 to have a low-coercive force layer of Gd-Fe-Co having iron group sublattice magnetization superiority and saturated magnetization falling in the range of 50 to 150 $emu/cm^3$ and a high-coercive force layer having the same characteristics as that in Example 4. The recording sensitivity was about 6.7 mW, and a reproducing CN ratio was about 58 dB. Thus, although good recording/reproducing characteristics could be obtained, a maximum reproducing power in a magnetic field of 600 Oe was as low as about 2.1 mW.

Example 5

Gd, Dy, $Fe_{70}Co_{30}$, and $Fe_{85}Co_{15}$ were used as targets for magnetic layers. As a low-coercive force layer, a Gd-Dy-Fe-Co film was formed using Gd, Dy, and $Fe_{70}Co_{30}$. As a high-coercive force layer, a Dy-Fe-Co film was formed using Dy and $Fe_{85}Co_{15}$. Other conditions were the same as those in Example 4.

When the low-coercive force layer comprised the Gd-Dy-Fe-Co film having iron group sublattice magnetization superiority and saturated magnetization falling in the range of 50 to 200 $emu/cm^3$ and the high-coercive layer comprised the Dy-Fe-Co film having rare earth group sublattice magnetization superiority and saturated magnetization falling within the range of 25 to 175 $emu/cm^3$, the recording sensitivity was about 6.5 mW, and a reproducing CN ratio was about 56 dB. Thus, good recording/reproducing characteristics could be obtained.

A maximum power free from deterioration of recorded information was as high as about 2.6 mW in a magnetic field of 600 Oe.

Comparative Example 4

For the purpose of comparison with Example 5, a disk was produced using the same targets as those in Example 5 to have a low-coercive force layer of Gd-Fe-Co having iron group sublattice magnetization superiority and saturated magnetization falling in the range of 50 to 150 $emu/cm^3$ ahd a high-coercive force layer having the same characteristics as that in Example 5. The recording sensitivity was about 6.7 mW, and a reproducing CN ratio was about 56 dB. Thus, although good recording/reproducing characteristics could be obtained, a maximum reproducing power in a magnetic field of 600 Oe was as low as about 1.9 mW.

Example 6

Following substantially the same procedures as in Example 4 except X = 50, a disk was produced to have a low-coercive force layer of a Gd-Dy-Fe-Co film having iron group sublattice magnetization superiority and saturated magnetization falling in the range of 50 to 250 $emu/cm^3$, and a high-coercive force layer of a Tb-Fe-Co film having rare earth group sublattice magnetization superiority and saturated magnetization falling in the range of 25 to 175 $emu/cm^3$. The recording sensitivity was about 7.0 mW, and a reproducing CN ratio was about 55 dB. Thus, good recording/reproducing characteristics were obtained. A maximum reproducing power in a magnetic field of 600 Oe was as high as about 2.9 mW.

**Claims**

1.    An opto-magnetic recording medium having first (4) and second (3) magnetic layers comprising rare earth-iron group amorphous alloys, the second magnetic layer (3) having a higher Curie temperature and a lower coercive force than those of the first magnetic layer (4) and the second magnetic layer (3) being exchange-coupled with the first magnetic layer (4), wherein the following condition is satisfied:

$$H_H > \sigma_w / (2M_s h) > H_L,$$

where $H_H$ is the coercive force of the first magnetic layer, $H_L$ is the coercive force of the second magnetic layer (3), $M_S$ is the saturated magnetization of the second magnetic layer (3), h is the film thickness of the second magnetic layer and $\sigma_w$ is the magnetic wall energy between the first and second magnetic layers, the medium being characterised in that said first magnetic layer (4) has a rare earth group sublattice magnetization superiority and a saturated magnetization in the range of 31.425 to 219.975 x $10^{-3}$Wb/m² (25 to 175 emu/cm³), and said second magnetic layer (3) has an iron group sublattice magnetization superiority and a saturated magnetization in the range of 62.85 to 251.4 x $10^{-3}$Wb/m² (50 to 200 emu/cm³); and that said second magnetic layer (3) comprises Gd and at least one of Tb and Dy and at least one of Fe and Co.

2. A medium according to claim 1, wherein the second magnetic layer (3) is doped with at least one element selected from the group consisting of Ni, Cr, Ti, Al, Si, Pt, In, and Cu.

3. A medium according to any preceding claim, wherein said first magnetic layer (4) consists of one of Tb-FeCo and DyFeCo.

4. A medium according to any preceding claim, wherein said first magnetic layer (4) has a compensation temperature between room temperature and a Curie temperature thereof.

5. A medium according to any preceding claim, wherein a thickness of said second magnetic layer falls in the range of 100 to 1,000 A.

6. A medium according to any preceding claim, wherein a thickness of said first magnetic layer falls in the range of 100 to 2,000 A.

7. A medium according to any preceding claim, wherein the total thickness of said first and second magnetic layers falls in a range of 500 to 2,000 A.

8. A medium according to any preceding claim, wherein the thickness of said first magnetic layer is larger than the thickness of said second magnetic layer.

9. An opto-magnetic disk carrying a recording medium as claimed in any of claims 1 to 8.

**Patentansprüche**

1. Optomagnetisches Aufzeichnungsmaterial, das eine erste (4) und zweite (3) magnetische Schicht besitzt, die amorphe Legierungen aus Elementen der seltenen Erden und der Eisengruppe umfassen, wobei die zweite magnetische Schicht (3) eine höher Curietemperatur und eine niedrigere Koerzitivkraft besitzt als die erste magnetische Schicht (4) und die zweite magnetische Schicht (3) austauschgekoppelt mit der ersten magnetischen Schicht (4) ist, worin die folgenden Bedingung erfüllt ist

$$H_H > \frac{\sigma_W}{2 \cdot M_S \cdot h} > H_L$$

worin $H_H$ die Koerzitivkraft der ersten magnetischen Schicht darstellt, $H_L$ die Koerzitivkraft der zweiten magnetischen Schicht darstellt, $M_S$ die Sättigungsmagnetisierung der zweiten magnetischen Schicht (3) darstellt, h die Filmdicke der zweiten magnetischen Schicht darstellt und $\sigma_W$ die Energie der magnetischen Barriere zwischen der ersten und der zweiten magnetischen Schicht darstellt,
wobei das Material dadurch gekennzeichnet ist, daß die erste magnetische Schicht (4) einen Seltenerdengruppenuntergittermagnetisierungsvorrang und eine Sättigungsmagnetisierung im Bereich von 31,425 bis 219,975 × $10^{-3}$ Wb/m² (25 bis 175 emu/cm³) aufweist und die zweite magnetische Schicht (3) einen Eisengruppenuntergittermagnetisierungsvorrang und eine Sättigungsmagnetisierung im Bereich von 62,85 bis 251,4 × $10^{-3}$ Wb/m² (50 bis 200 emu/cm³) umfaßt, und daß die zweite magnetische Schicht (3) Gd und wenigstens ein Element, ausgewählt aus der Gruppe, bestehend aus Tb und Dy, und wenigstens ein Element, ausgewählt aus der Gruppe, bestehend aus Fe und Co, umfaßt.

2. Material nach Anspruch 1, worin die zweite magnetische Schicht (3) mit wenigstens einem Element, ausgewählt aus der Gruppe, bestehend aus Ni, Cr, Ti, Al, Si, Pt, In und Cu, dotiert ist.

3. Material nach einen der vorhergehenden Ansprüche, worin die erste magnetische Schicht (4) entweder aus TbFeCo oder aus DyFeCo besteht.

4. Material nach einem der vorhergehenden Ansprüche, worin die erste magnetische Schicht (4) eine Kompensationstemperatur zwischen Raumtemperatur und einer Curietemperatur derselben besitzt.

5. Material nach einem der vorhergehenden Ansprüche, worin eine Dicke der zweiten magnetischen Schicht in den Bereich von 100 bis 1000 Å fällt.

**6.** Material nach einem der vorhergehenden Ansprüche, worin eine Dicke der ersten magnetischen Schicht in den Bereich von 100 bis 2000 Å fällt.

**7.** Material nach einem der vorhergehenden Ansprüche, worin die Gesamtdicke der ersten und der zweiten magnetischen Schicht in den Bereich von 500 bis 2000 Å fällt.

**8.** Material nach einem der vorhergehenden Ansprüche, worin die Dicke der ersten magnetischen Schicht größer als die Dicke der zweiten magnetischen Schicht ist.

**9.** Optomagnetische Platte, die ein Aufzeichnungsmaterial nach einem der Ansprüche 1 bis 8 trägt.

## Revendications

**1.** Support d'enregistrement magnéto-optique comportant des première (4) et seconde (3) couches magnétiques comprenant des alliages amorphes du groupe terres rares - fer, la seconde couche magnétique (3) ayant une température de Curie plus élevée et une force coercitive plus faible que la première couche magnétique (4), et la seconde couche magnétique (3) étant couplée pour échange avec la première couche magnétique (4), dans lequel la condition suivante est satisfaite :

$$H_H > \sigma_W / (2M_S h) > H_L,$$

où $H_H$ est la force coercitive de la première couche magnétique, $H_L$ est la force coercitive de la seconde couche magnétique (3), $M_S$ est la magnétisation saturée de la seconde couche magnétique (3), h est l'épaisseur de couche de la seconde couche magnétique et $\sigma_W$ est l'énergie de la paroi magnétique entre les première et seconde couches magnétiques, le support étant caractérisé en ce que ladite première couche magnétique (4) a une supériorité de magnétisation du sous-réseau cristallin du groupe des terres rares et une magnétisation saturée dans la plage allant de 31,425 à 219,975 × $10^{-3}$ Wb/$m^2$ (25 à 175 emu/$cm^3$), et ladite seconde couche magnétique (3) a une supériorité de magnétisation du sous-réseau cristallin du groupe du fer et une magnétisation saturée dans la plage allant de 62,85 à 251,4 × $10^{-3}$ Wb/$m^2$ (50 à 200 emu/$cm^3$) ; et en ce que ladite seconde couche magnétique (3) comprend Gd et au moins un élément parmi Tb et Dy et au moins un élément parmi Fe et Co.

**2.** Support selon la revendication 1, dans lequel la seconde couche magnétique (3) est dopée avec au moins un élément choisi dans le groupe formé par Ni, Cr, Ti, Al, Si, Pt, In et Cu.

**3.** Support selon l'une quelconque des revendications précédentes, dans lequel ladite première couche magnétique (4) comprend un élément parmi Tb-FeCo et DyFeCo.

**4.** Support selon l'une quelconque des revendications précédentes, dans lequel ladite première couche magnétique (4) a une température de compensation située entre la température ambiante et une température de Curie de celle-ci.

**5.** Support selon l'une quelconque des revendications précédentes, dans lequel une épaisseur de ladite seconde couche magnétique tombe dans la plage allant de 100 à 1000 Å.

**6.** Support selon l'une quelconque des revendications précédentes, dans lequel une épaisseur de ladite première couche magnétique tombe dans la plage allant de 100 à 2000 Å.

**7.** Support selon l'une quelconque des revendications précédentes, dans lequel l'épaisseur totale desdites première et seconde couches magnétiques tombe dans une plage allant de 500 à 2000 Å.

**8.** Support selon l'une quelconque des revendications précédentes, dans lequel l'épaisseur de ladite première couche magnétique est supérieure à l'épaisseur de ladite seconde couche magnétique.

**9.** Disque magnéto-optique portant un support d'enregistrement selon l'une quelconque des revendications 1 à 8.

EP 0 330 394 B1

F I G. 1

9